# EUROPÄISCHE PATENTSCHRIFT

(11) **EP 3 407 012 B1**
(45) Veröffentlichungstag und Bekanntmachung des Hinweises auf die Patenterteilung: **30.06.2021**
(21) Anmeldenummer: 17000899.9
(22) Anmeldetag: 26.05.2017
(51) Int. Cl.: G01B 21/04, G01B 1/00

(54) **KALIBRIERKÖRPER**
CALIBRATION BODY
CORPS D'ÉTALONNAGE

(43) Veröffentlichungstag der Anmeldung: 28.11.2018
(73) Patentinhaber: QS GRIMM GmbH, 77656 Offenburg/Elgersweier (DE)
(72) Erfinder: GRIMM, Volker, 77716 Hofstetten (DE)
(74) Vertreter: Mertzlufft-Paufler, Cornelius

(56) Entgegenhaltungen:
- US-A- 4 364 182
- US-A1- 2004 202 364
- NAWARA L ET AL: "UBERPRUFUNG VON KOORDINATENMESSGERATEN MIT NORMALEN", TECHNISCHE RUNDSCHAU,, Bd. 80, Nr. 41, 7. Oktober 1988 (1988-10-07), Seiten 54-57, XP000022879, ISSN: 1023-0823

## Beschreibung

Die Erfindung beschreibt einen Kalibrierkörper mit einem Grundkörper an dem wenigstens ein Messelement befestigt ist, wobei das Messelement einen Abstandshalter, der mit einem Ende am Grundkörper befestigt ist, und eine Maßverkörperung, die am freien Ende des Abstandshalters befestigt ist, aufweist.

Solche Kalibrierkörper sind in verschiedenen Ausführungen bekannt und werden beispielsweise zur Kalibrierung von Koordinatenmessgeräten (KMG) eingesetzt. Ein KMG weist in der Regel einen Messtaster auf, der wenigstens in einer Raumachse beweglich geführt ist.

Daneben existieren auch Bearbeitungsmaschinen und Bearbeitungszentren, etwa 5-Achsen Bearbeitungszentren, die ein eingebautes Messgerät zur Wegmessung besitzen. Damit kann beispielsweise während der Bearbeitung eines Werkstückes eine genaue Wegmessung stattfinden, etwa zu Steuern der Achsenbewegungen. Auch diese integrierten Messgeräte können mit einem solchen Kalibrierkörper kalibriert werden. Daneben kann der Kalibrierkörper selbstverständlich auch zum Kalibrieren von anderen Messgeräten verwendet werden. Im Folgenden ist daher mit KMG oder Koordinatenmessgerät immer auch ein solches integriertes Messgerät oder ein anderes Messgerät gemeint.

Die Vermessung eines Objekts mit einem KMG erfolgt in der Regel durch Abtasten des Objekts mit dem Messtaster. Damit die Abtastung ein genaues Ergebnis liefert muss das KMG jedoch kalibriert sein.

Zur Kalibrierung wird mit dem KMG ein Messelement eines Kalibrierkörpers vermessen. Im Unterschied zur normalen Messung sind jedoch die absoluten Raumkoordinaten und die Abmessungen der Maßverkörperung des Messelements vorher sehr präzise bekannt. Aus der Abweichung der gemessenen Koordinaten und der vorbekannten Sollkoordinaten ist das KMG kalibrierbar.

Bekannte Kalibrierkörper weisen beispielsweise mehrere Messelemente auf, die etwa in einer Reihe angeordnet sind. Um damit mehrere Raumachsen des KMG zu vermessen ist es im Stand der Technik üblich den Kalibrierkörper nach einer Messung zu verstellen, beispielsweise zu verschwenken. Dabei kann es jedoch zu Ungenauigkeiten kommen. Darüber hinaus dauert das Umbauen sehr lange.

Aus der US 4 364 182 A1 ist ein Kalibrierkörper bekannt, der mehrere Messelemente mit Kugelkopf aufweist. Die Messelemente sind in einem lateinischen Quadrat angeordnet.

Nawara et.al, 1155 Technische Rundschau 80 (1988) 7. Okt., No. 41, Bern, Schweiz, beschreiben einen Kalibrierkörper mit Messelementen mit Kugelkopf, die unregelmäßig angeordnet sind.

In US 2004/0202364 A1 ist ein Kalibrierobjekt für ein 3D Stereographieverfahren gezeigt, das mehrere Messelemente mit Kugelköpfen aufweist, die ebenfalls im Raum verteilt angeordnet sind.

Aufgabe der Erfindung ist es daher einen Kalibrierkörper zu schaffen, der eine schnellere und genauere Kalibrierung eines Koordinatenmessgeräts ermöglicht.

Diese Aufgabe wird erfindungsgemäß durch einen Kalibrierkörper mit den Merkmalen des Anspruch 1 gelöst.

Der Vorteil besteht nun darin, dass die Messelemente in Bezug auf die Grundebene verteilt angeordnet sind. Das bedeutet, dass die Schnittpunkte mit der Grundebene, die sich durch eine senkrechte Verlängerung der Messelemente auf die Grundebene ergeben, nicht auf einer Geraden liegen.

Zudem besitzen zumindest zwei der drei Messelemente unterschiedliche Längen. Die Maßverkörperungen liegen dadurch in Bezug auf die Grundebene in einem dreidimensionalen Messraum verteilt. Auf diese Weise stehen zur Kalibrierung eines Koordinatenmessgeräts viele verschiedene Messpositionen zur Verfügung. Es sind daher in einer Aufstellung des Kalibrierkörpers Messungen in verschiedenen Raumachsen und Ebenen durchführbar. Der Kalibrierkörper muss dazu in Bezug auf das Koordinatenmessgerät nicht bewegt oder ausgerichtet werden. Die Kalibrierung kann dadurch wesentlich schneller erfolgen.

Dadurch werden auch Fehler, die durch falsche Positionierung des Kalibrierkörpers entstehen vermieden, wodurch die Kalibrierung wesentlich genauer erfolgen kann.

In einer vorteilhaften Ausführung sind die Messelemente derart ausgestaltet, dass mehr als die Hälfte der Oberfläche jeder Maßverkörperung ununterbrochen abtastbar ist. Dadurch wird insbesondere die Genauigkeit der Koordinatenbestimmung erhöht.

Dazu kann es zweckmäßig sein, wenn die Maßverkörperungen an nur einer Befestigungsstelle mit dem Abstandshalter verbunden sind. Dadurch ist die Oberfläche die dem Abstandshalter gegenüber liegt automatisch frei und abtastbar.

Um sicherzustellen, dass mehr als die Hälfte der Oberfläche abtastbar ist, ist in einer Ausführung der Erfindung zumindest an der Befestigungsstelle der Querschnitt des Abstandshalters kleiner als der Querschnitt der Maßverkörperungen. Insbesondere in Verbindung mit nur einer Befestigungsstelle bedeutet dies, dass wesentlich mehr als die Hälfte der Oberfläche der Maßverkörperung abtastbar ist.

Die Maßverkörperung ist durch den Abstandshalter gehalten und an einer Befestigungsstelle mit diesem verbunden. Desto kleiner der Querschnitt des Abstandshalters im Bereich der Befestigungsstelle, desto kleiner ist der durch den Abstandshalter verdeckte Teil der Oberfläche. Dazu kann es ausreichend sein, wenn der Querschnitt des Abstandshalters in einem Abtastbereich, der an der Befestigungsstelle liegt, kleiner ist, so dass ein Messtaster ungehindert die Oberfläche der Maßverkörperung abtasten kann.

Kleiner/größer in Bezug auf den Querschnitt bedeutet, dass die Querschnittsfläche und/oder eine Kante, eine Diagonale oder ein Radius des Querschnitts kleiner/größer ist.

In einer vorteilhaften Ausführung ist der Querschnitt des Abstandshalters außerhalb dieses Abtastbereichs größer als der Querschnitt der Maßverkörperung. Dadurch ist die Stabilität des Anstandshalters und damit auch die Verwindungssteifigkeit größer. Weiterhin ist dadurch der Temperatureinfluss geringer, so dass durch Wärmeausdehnung weniger Messabweichnungen entstehen.

Insbesondere ist der der Querschnitt des Abstandhalters gegenüber dem Querschnitt der Maßverkörperung wesentlich größer, vorzugsweise mindestens um den Faktor 2, insbesondere vorzugsweise mindestens um den Faktor 5.

Besonders zweckmäßig kann es sein, dass sich der Abstandshalter konisch auf die Befestigungsstelle verjüngt. Der Abstandshalter also so auf die Befestigungsstelle zuläuft, dass dort der Querschnitt des Abstandshalters geringer ist als der Querschnitt der Maßverkörperung, wie oben beschrieben.

Die Maßverkörperungen können verschiedene Formen aufweisen. Wobei Oberflächen ohne Kanten und Ecken vorteilhaft sind, da ein Messtaster einfacher auf diesen entlangführbar ist.

Insbesondere vorteilhaft ist es, wenn die Maßverkörperungen als Kugeln oder als Kugelsegmente ausgebildet sind, wobei der Umfangswinkel des Kugelsegments größer als 180° ist. Zur Bestimmung der Position der Kugel wird in der Regel deren Oberfläche abgefahren und aus der Krümmung der Oberfläche der Kugelmittelpunkt bestimmt. Diese Bestimmung des Mittelpunkts gelingt besonders gut, wenn die Abtastung mehr als eine Halbkugel erfasst. Wobei durch die Abmessungen sichergestellt ist, dass ein Winkel der größer als 180° beträgt von der Kugeloberfläche ununterbrochen abtastbar ist.

Eine vorteilhafte Ausführung sieht vor, dass die Abstandshalter einen runden Querschnitt aufweisen und/oder dass die Abstandshalter zylinderförmig ausgebildet sind. Insbesondere in Zusammenhang mit kugelförmigen Maßverkörperungen kann dies vorteilhaft sein.

In einer vorteilhaften Ausführung besitzen die Abstandshalter einen Querschnitt, der größer ist, als der Querschnitt der Maßverkörperungen. Die Abstandshalter können beispielsweise eine zylindrische Form aufweisen. In diesem Fall kann der Radius der Abstandshalter größer sein, als der Radius der Kugel.

Die Messelemente können jeweils alle identisch ausgebildet sein. Um den unterschiedlichen Abstand zur Grundebene herzustellen, können die Messelemente auf unterschiedlich hohen Vorsprüngen oder Podesten angeordnet sein.

In einer besonders zweckmäßigen Ausführung weisen die Messelemente jedoch Abstandshalter mit verschiedenen Längen auf. Auf diese Weise kann das Grundelement beispielsweise eine Platte mit einer ebenen Oberfläche sein, die zugleich die Grundebene bildet. Durch Variation der Abstandshalter stehen auf einfache Weise eine Vielzahl an Messelementen mit unterschiedlichen Längen zur Verfügung, die innerhalb der Grundebene verteilt anordnenbar sind.

Erfindungsgemäß weist der Kalibrierkörper mindestens vier Messelemente auf, die eine viereckige, insbesondere rechteckige oder quadratische, Grundform in der Grundebene definieren. Dabei ist insbesondere in jeder Ecke der Grundform ein Messelement angeordnet. Auf diese Weise ist beispielsweise der gesamte Messbereich eines KMG mit einer Aufstellung des Prüfkörpers abdeckbar.

Erfindungsgemäß sind die Messelemente in einem rechtwinkligen Raster in mehreren parallelen Reihen angeordnet, wobei jede Reihe wenigstens zwei Messelemente beinhaltet. Durch die regelmäßige Anordnung ist eine einfache Anordnung der Messelemente möglich. Vorteilhaft dabei ist, dass durch die Vielzahl der Messelemente viele Messpositionen vorhanden sind, die aufgrund des Rasters einfach handhabbar sind.

Dabei ist es möglich, dass die Lägen der Messelemente beliebig variieren.

Erfindungsgemäß weisen die Messelemente einer Reihe des Rasters eine gleichbleibende Länge oder eine ansteigende Länge auf. Dadurch ist die Erreichbarkeit der Maßverkörperungen mittels eines Messtasters einfacher.

Für die Genauigkeit der Kalibrierung ist die Maßhaltigkeit des Kalibrierkörpers besonders wichtig. In einer vorteilhaften Ausführung weist der Kalibrierkörper, insbesondere der Grundkörper, Versteifungen zur Vergrößerung der Verwindungssteifigkeit auf. Solche Versteifungen können auch als Streben zwischen den Messelementen angeordnet sein, beispielsweise um ein Verbiegen der Abstandshalter zu verhindern oder verringern.

Ein Kalibrierverfahren, das mit dem erfindungsgemäßen Kalibrierkörper durchgeführt wird,
besitzt den Vorteil, dass die Lage der Maßverkörperungen in einer Aufstellung des Kalibrierkörpers erfasst werden. Dadurch wird die Zeit, die für eine Kalibrierung notwendig ist wesentlich verkürzt. Weil die Aufstellung des Kalibrierkörpers nicht geändert werden muss, steigt auch Genauigkeit der Messung.

Insbesondere können dabei die drei zueinander orthogonal stehenden Raumachsen und/oder zugehörige Raumdiagonalen, in einer Aufstellung des Kalibrierkörpers erfasst werden.

Zur Kalibrierung eines Bearbeitungszentrums wird der erfindungsgemäße Kalibrierkörper auf dem Maschinentisch angeordnet so dass er in der Reichweite des integrierten Messgeräts liegt. Dabei ist auch hier der Vorteil, dass eine Kalibrierung aller Raumachsen, also bei einem 5-Achs-Bearbeitungszentrum auch alle fünf Achsen, in nur einer Aufstellung und in einem Kalibriervorgang kalibriert werden kann.

Die Erfindung ist nachfolgend anhand eines vorteilhaften Ausführungsbeispiels mit Bezug auf die beiliegenden Zeichnungen näher erläutert.

Es zeigt:
- Fig. 1: eine Schrägansicht eines erfindungsgemäßen Kalibrierkörpers,
- Fig. 2: eine weitere Schrägansicht des Kalibrierkörpers der Fig. 1,
- Fig. 3: eine weitere Schrägansicht des Kalibrierkörpers der Fig. 1,
- Fig. 4: eine Seitenansicht des Kalibrierkörpers der Fig. 1.

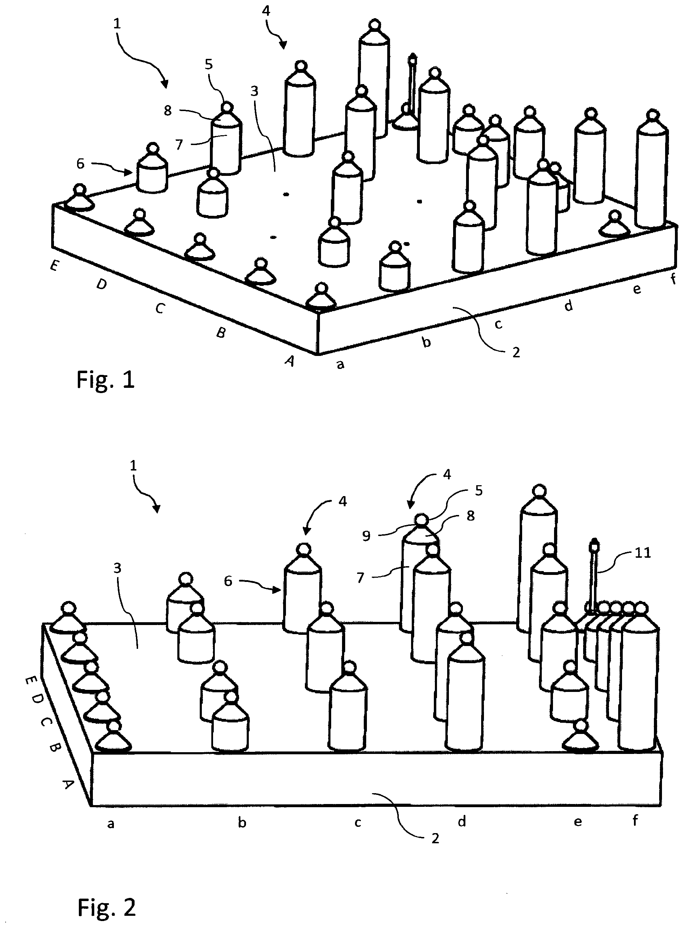

Die Fig. 1 und 2 zeigen einen im Ganzen mit 1 bezeichneten erfindungsgemäßen Kalibrierkörper. Der Kalibrierkörper 1 weist einen quaderförmigen Grundkörper 2 auf, der eine quadratische Grundebene 3 besitzt. Im Beispiel weist die Grundebene 3 eine Kantenlänge von 900 mm auf, wobei jedoch auch andere Abmessungen möglich sind.

Auf der Grundebene 4 ist ein rechtwinkliges, Raster mit sechs Reihen a-f und fünf Spalten A-E definiert. Dabei sind die Abstände innerhalb der Reihen a-e und der Spalten A-E jeweils regelmäßig und identisch. Die Abstände der Reihen sind jedoch kleiner als die Abstände der Spalten. Die fünfte Reihe e befindet sich daher nicht am Rand der Grundeben und der freie Platz wird durch die sechste Reihe f eingenommen. Der Abstand zwischen den beiden Reihen e und f ist daher kleiner.

Innerhalb dieses Rasters sind auf der Grundebene 3 mehrere Messelemente 4 angeordnet.

Jeder Abstandhalter 6 besitzt einen Zylinderabschnitt 7, einen Konusabschnitt 8 und eine Befestigungsstelle 9.

Der Zylinderabschnitt 7 ist mit einem Ende mit der Grundebene 3 verbunden. Die Abstandshalter 6 stehen jeweils rechtwinklig aus der Grundebene 3 hervor. Die Abstandshalter 6 müssen möglichst biegesteif und maßhaltig sein. Sie können als Hohlzylinder oder Rohr oder auch massiv ausgebildet sein. Wobei die Ausgestaltung auch durch die Materialwahlbeeinflusst sein kann. Hohlzylinder können beispielsweise aus Kohlefasern hergestellt werden, wodurch eine gute Steifigkeit erzielt wird. Massivkörper können beispielsweise aus Keramik hergestellt sein, die ebenfalls eine gute Steifigkeit, aber auch eine geringe Wärmeausdehnung und eine gute Maßhaltigkeit aufweisen.

Die Abstandshalter können zur Befestigung auf der Grundebene 3 beispielsweise ein Innengewinde aufweisen, in das eine Schraube durch eine Durchgangsbohrung durch den Grundkörper 2 hindurch einschraubbar ist. Der Abstandshalter 6 kann jedoch auch einen Gewindestift aufweisen, der in eine Gewindebohrung in dem Grundkörper 2 einschraubbar ist. Zur Befestigung der Abstandshalter stehen darüber hinaus noch weitere Möglichkeiten zur Verfügung, weshalb die Erfindung nicht auf die hier beispielhaft genannten Möglichkeiten eingeschränkt ist.

Am freien Ende des Zylinderabschnitts 7 schließt sich der Konusabschnitt 8 nahtlos an. Im Konusabschnitt 8 verjüngt sich der Durchmesser konisch, vorzugsweise auf wenigstens die Hälfte des Durchmessers des Zylinderabschnitts 7. Am freien Ende des Konusabschnitts 8 befindet sich die Befestigungsstelle 9, an der die Maßverkörperung 5 befestigt ist. Im Beispiel sind die Maßverkörperungen 5 als Kugel ausgebildet, wobei alle Kugeln 5 denselben Durchmesser besitzen. Wichtig ist jedoch dass der Durchmesser Dz des Zylinderabschnitts 7 größer als der Durchmesser Dm der Maßverkörperung 5 ist. Vorzugsweise ist der Durchmesser Dz des Zylinderabschnitts 7 mindestens doppelt so groß, wie der Durchmesser Dm der Maßverkörperung 5. Im gezeigten Beispiel ist der Durchmesser Dz des Zylinderabschnitts 7 dreimal so groß.

Daneben ist der Durchmesser Dm der Maßverkörperung 5 größer als der Durchmesser Dk des Konusabschnitts 8 an der Befestigungsstelle 9. Im Beispiel ist die Befestigungsstelle 9 als Zylinderring 10 ausgebildet, dessen Durchmesser dem Durchmesser Dk des Konusabschnitts 9 entspricht und halb so groß ist, wie der Durchmesser Dm der Maßverkörperung 5. Die kugelförmige Maßverkörperung 5 ist passgenau darin aufgenommen. Zur Befestigung kann die Maßverkörperung 5 mit dem Zylinderring 10 verklebt oder über ein Gewinde verschraubt sein. Daneben sind auch andere Befestigungsarten vorstellbar. Insbesondere kann das Messelement 4 einstückig ausgebildet sein, so dass keine Befestigung notwendig ist.

Es ist jedoch durchaus möglich und auch vorteilhaft, dass die Maßverkörperung 5 und der Abstandshalter 6 aus verschiedenen Materialen bestehen. Wobei insbesondere die unterschiedlichen Anforderungen berücksichtigt werden können. So bietet es sich an, die Maßverkörperung 5 aus einem Keramikmaterial herzustellen, da dieses eine große Maßhaltigkeit, eine geringe Temperaturausdehnung und eine geringe Abnutzung durch das Abtasten mit einem Taster 11 aufweist. Die Abstandshalter 6 können aus einem Metall oder Kohlefasern kostengünstig und einfach hergestellt sein.

In einer alternativen Ausführung kann die Befestigungsstelle 9 einen hervorstehenden Gewindestift aufweisen, der in eine Gewindebohrung in der Maßverkörperung 5 eingeschraubt ist.

Durch die gewählten Abmessungen ist sichergestellt, dass die Oberfläche 12 der Maßverkörperung 5 fast vollständig abtastbar ist. Dabei spielt auch eine Rolle, dass die Maßverkörperung 5 nur eine Befestigungsstelle 9 mit dem Abstandshalter 6 besitzt. Dies hat zudem den Vorteil, dass die Oberfläche 12 in alle Raumrichtungen allseits bis über den Äquator 13 abtastbar ist und nicht nur in einem durch die Befestigung beschränkten Bereich.

Die Messelemente 4 sind im Beispiel nach einem ganz bestimmten Muster angeordnet, das eine effiziente Messung aller Raumachsen mit möglichst geringem Zeitaufwand ermöglicht. Dazu existieren die Messelemente 4 in fünf verschiedene Längen L1 bis L5. Dabei ist L1 die kürzeste Länge, bei der der Zylinderabschnitt 7 praktisch nicht ausgebildet ist. Während L5 die längste Länge darstellt. Wobei die Längen gleichmäßig von L1 zu L5 zunehmen.

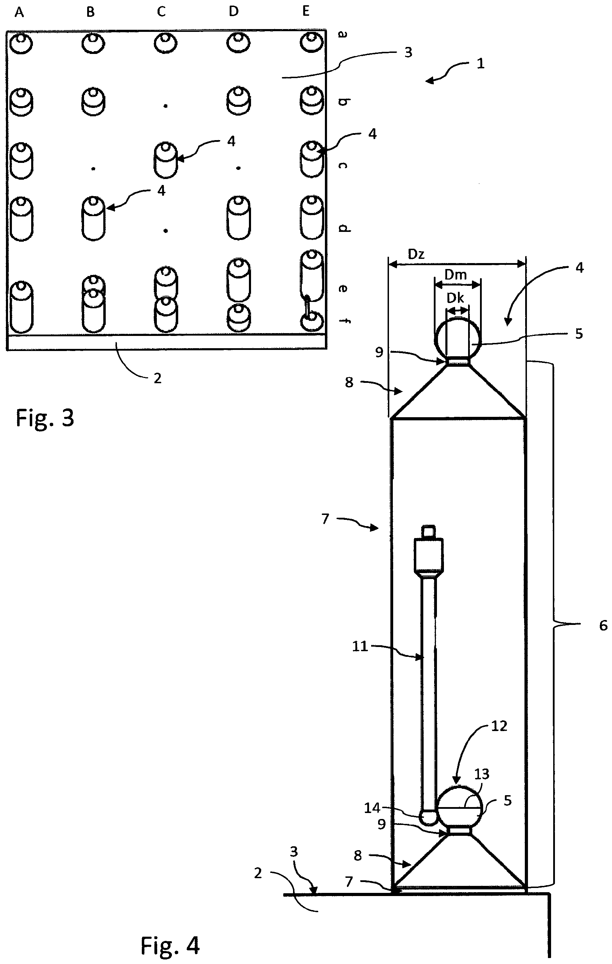

Fig. 3 zeigt diese Anordnung in einer schrägen Draufsicht. Die Anordnung ist in der nachfolgenden Tabelle veranschaulicht.

| Reihe/ Spalte | A | B | C | D | E |
|---|---|---|---|---|---|
| a | L1 | L1 | L1 | L1 | L1 |
| b | L2 | L2 | | L2 | L2 |
| c | L3 | | L3 | | L3 |
| d | L4 | L4 | | L4 | L4 |
| e | L1 | L2 | L3 | L4 | L5 |
| f | L5 | L4 | L3 | L2 | L1 |

Dabei fällt auf, dass nicht alle Plätze des Rasters belegt sind. An den Rändern und den Diagonalen stehen zudem jeweils monoton steigende Abfolgen an Messelementen zur Verfügung. Durch diese spezielle Anordnung ist eine Vermessung des vollständigen Messbereichs eines KMG innerhalb des Rasters und mit nur einer Aufstellung des Kalibrierkörpers 1 möglich. Durch die Leerstellen im Raster ist sichergestellt, dass alle vorhandenen Messelemente gut anfahrbar sind, ohne dass Messelemente verdeckt sind.

In der Fig. 4 ist zusätzlich ein Taster 11 eines KMG dargestellt. Der Taster 11 besitzt eine Abtastkugel 14, meist aus Rubin oder einem anderen sehr harten Material.

Hier ist deutlich zu sehen, dass die Abtastkugel 14 bis weit unter den Äquator 13 der Maßverkörperung 5 gelangt, so dass in etwa ein Winkelbereich von 230° der Maßverkörperung 5 abtastbar ist. Auf diese Weise ist der Mittelpunkt der Maßverkörperung 5 wesentlich genauer bestimmbar und damit auch die Genauigkeit der Messung insgesamt wesentlich höher.

Im Betrieb wird der erfindungsgemäße Kalibrierkörper 1 in den Abtastbereich eines KMG positioniert. Vorzugsweise vor Reihe a. Aufgrund der Anordnung der Messelemente 4 sind ausgehend von dieser Position sehr viele Messpunkte in allen drei Raumachsen ansteuerbar. Auf diese Weise kann mit nur einer Aufstellung des Kalibrierkörpers 1 das KMG vollständig kalibriert werden. Auf diese Weise kann die Dauer eines Kalibriervorgangs signifikant verkürzt werden.

Da dabei keine Positionswechsel des Kalibrierkörpers stattfinden müssen, steigt zusätzlich auch die Genauigkeit und insbesondere die Wiederholgenauigkeit der Messungen.

Im Beispiel weist der Kalibrierkörper die folgenden Abmessungen auf. Die Kantenlänge der quadratischen Grundebene beträgt 900 mm. Der Durchmesser des Zylinderabschnitts 7 beträgt Dz = 58 mm, der Durchmesser der Maßverkörperung 5 beträgt Dm = 19 mm und der Durchmesser der Befestigungsstelle 9 beträgt Dk = 9,5 mm.

Die Abstände der Spalten A-E betragen jeweils etwa 207 mm, wohingegen die Abstände der Reihen a-e 185 mm betragen und der Abstand zwischen den Reihen e und f beträgt nur 89 mm.

Selbstverständlich stellen diese Abmessungen lediglich eine mögliche vorteilhafte Ausführungsform dar, weshalb die Erfindung nicht auf diese Abmessungen eingeschränkt sein soll. Wie bereits oben erwähnt können mit dem erfindungsgemäßen Kalibrierkörper auch integrierte Messgeräte von Bearbeitungszentren und anderen Bearbeitungsmaschinen kalibriert werden. Auch hier ist von Vorteil, dass praktisch der gesamte Bearbeitungsraum in nur einer Aufstellung vermessen und kalibriert werden kann.

### Bezugszeichenliste

- 1: Kalibrierkörper
- 2: Grundkörper
- 3: Grundebene
- 4: Messelement
- 5: Maßverkörperung
- 6: Abstandshalter
- 7: Zylinderabschnitt
- 8: Konusabschnitt
- 9: Befestigungsstelle
- 10: Zylinderring
- 11: Messtaster
- 12: Oberfläche der Maßverkörperung
- 13: Äquator der Maßverkürperung
- 14: Abtastkugel
- A-E: Spalten
- a-f: Reihen
- L1-L5: Längen
- Dm: Durchmesser der Maßverkörperung
- Dk: Durchmesser des Konusabschnitts / der Befestigungsstelle
- Dz: Durchmesser des Zylinderabschnitts

## Patentansprüche

1. Kalibrierkörper (1) mit einem Grundkörper (2) an dem mehrere Messelemente (4) befestigt sind, wobei jedes Messelement (4) einen Abstandshalter (6), der mit einem Ende am Grundkörper (2) befestigt ist, und eine Maßverkörperung (5), die am freien Ende des Abstandshalters (6) befestigt ist, aufweist, wobei die Messelemente (4) wenigstens vier unterschiedliche Längen aufweisen und eine rechteckige oder quadratische Grundform in der Grundebene (3) des Grundkörpers (2) definieren, wobei die Messelemente (4) in einem rechtwinkligen Raster in mindestens vier parallelen Reihen (a-f) und mindestens vier parallelen Spalten (A-E) angeordnet sind, und wobei jede Reihe (a-f) und jede Spalte (A-E) wenigstens drei Messelemente (4) beinhaltet, **dadurch gekennzeichnet, dass** die Messelemente (4) einer Reihe (a-f) des Rasters jeweils eine gleichbleibende Länge oder monoton ansteigende Längen aufweisen, dass der Kalibrierkörper (1) mehrere Reihen (a-d) mit Messelementen (4) mit gleichbleibenden Längen aufweist, wobei die Reihen (a-d) mit gleichbleibenden Längen so angeordnet sind, dass die Messelemente (4) in deren Spalten (A-E) monoton ansteigende Längen aufweisen.

2. Kalibrierkörper (1) nach Anspruch 1, **dadurch gekennzeichnet, dass** mehr als die Hälfte der Oberfläche (12) jeder Maßverkörperung (5) ununterbrochen abtastbar ist und/oder dass die Maßverkörperungen (5) an nur einer Befestigungsstelle (9) mit dem Abstandshalter (6) verbunden sind.

3. Kalibrierkörper (1) nach Anspruch 1 oder 2, **dadurch gekennzeichnet, dass** zumindest an der Befestigungsstelle (9) der Querschnitt (Dk) des Abstandshalters (6) kleiner ist als der Querschnitt (Dm) der Maßverkörperungen (5) und/oder dass die Abstandshalter (6) einen größeren Querschnitt (Dz) aufweisen als die Maßverkörperungen (5) und sich zur Befestigungsstelle (9) hin verjüngen.

4. Kalibrierkörper (1) nach einem der Ansprüche 1 bis 3, **dadurch gekennzeichnet, dass** die Maßverkörperungen (5) als Kugeln oder als Kugelsegmente ausgebildet sind, insbesondere wobei der Umfangswinkel des Kugelsegments größer als 180° beträgt.

5. Kalibrierkörper (1) nach einem der Ansprüche 1 bis 4, **dadurch gekennzeichnet, dass** die Messelemente (4) Abstandshalter (6) mit verschiedenen Längen aufweisen und/oder dass die Abstandshalter (6) einen runden Querschnitt aufweisen und/oder dass die Abstandshalter (6) einen zylinderförmigen Abschnitt (7) aufweisen.

6. Kalibrierkörper (1) nach einem der Ansprüche 1 bis 5, **dadurch gekennzeichnet, dass** einige Plätze des Rasters nicht durch Messelemente (4) belegt sind.

7. Kalibrierkörper (1) nach einem der Ansprüche 1 bis 6, **dadurch gekennzeichnet, dass** der Kalibrierkörper (1) wenigstens eine Reihe, insbesondere zwei Reihen (e, f), mit Messelementen mit monoton ansteigenden Längen aufweist.

8. Kalibrierkörper (1) nach einem der Ansprüche 1 bis 7, **dadurch gekennzeichnet, dass** der Kalibrierkörper (1) Versteifungen zur Vergrößerung der Verwindungssteifigkeit, insbesondere zwischen den Messelementen (4), aufweist.

## Claims

1. Calibration body (1) with a main body (2), to which a plurality of measuring elements (4) are fastened, each measuring element (4) having a spacer element (6), which is fastened by way of one end to the main body (2), and a solid measure (5) which is fastened to the free end of the spacer element (6), the measuring elements (4) having at least four different lengths and defining a rectangular or square basic shape in the base plane (3) of the main body (2), the measuring elements (4) being arranged in a right-angled pattern in at least four parallel rows (a-f) and at least four parallel columns (A-E), and each row (a-f) and each column (A-E) comprising at least three measuring elements (4), **characterized in that** the measuring elements (4) of one row (a-f) of the pattern in each case have a uniform length or monotonously increasing lengths, **in that** the calibration body (1) has a plurality of rows (a-d) with measuring elements (4) with uniform lengths, the rows (a-d) with uniform lengths being arranged in such a way that the measuring elements (4) have monotonously increasing lengths in their columns (A-E).

2. Calibration body (1) according to Claim 1, **characterized in that** more than half of the surface (12) of each solid measure (5) can be sensed in an uninterrupted manner, and/or **in that** the solid measures (5) are connected to the spacer element (6) at only one fastening point (9).

3. Calibration body (1) according to Claim 1 or 2, **characterized in that** the cross section (Dk) of the spacer element (6) at least at the fastening point (9) is smaller than the cross section (Dm) of the solid measures (5), and/or **in that** the spacer elements (6) have a greater cross section (Dz) than the solid measures (5) and taper towards the fastening point (9).

4. Calibration body (1) according to one of Claims 1 to 3, **characterized in that** the solid measures (5) are configured as balls or as ball segments, the circumferential angle of the ball segment being greater than 180°, in particular.

5. Calibration body (1) according to one of Claims 1 to 4, **characterized in that** the measuring elements (4) have spacer elements (6) with different lengths, and/or in that the spacer elements (6) have a round cross section, and/or **in that** the spacer elements (6) have a cylindrical section (7).

6. Calibration body (1) according to one of Claims 1 to 5, **characterized in that** some spaces of the pattern are not occupied by way of measuring elements (4).

7. Calibration body (1) according to one of Claims 1 to 6, **characterized in that** the calibration body (1) has at least one row, in particular two rows (e, f) , with measuring elements with monotonously increasing lengths.

8. Calibration body (1) according to one of Claims 1 to 7, **characterized in that** the calibration body (1) has reinforcements for increasing the torsional rigidity, in particular between the measuring elements (4).

## Revendications

1. Corps d'étalonnage (1), comprenant un corps de base (2) sur lequel plusieurs éléments de mesure (4) sont fixés, dans lequel chaque élément de mesure (4) présente une entretoise (6), qui est fixée avec une extrémité sur le corps de base (2), et une mesure matérialisée (5), qui est fixée à l'extrémité libre de l'entretoise (6), dans lequel les éléments de mesure (4) présentent au moins quatre longueurs différentes et une forme de base rectangulaire ou carrée dans le plan de base (3) du corps de base (2), dans lequel les éléments de mesure (4) sont disposés dans une grille rectangulaire en au moins quatre rangées parallèles (a-f) et au moins quatre colonnes parallèles (A-E), et dans lequel chaque rangée (a-f) et chaque colonne (A-E) comporte au moins trois éléments de mesure (4), **caractérisé en ce que** les éléments de mesure (4) d'une rangée (a-f) de la grille présentent respectivement une longueur constante ou des longueurs croissant de façon monotone, **en ce que** le corps d'étalonnage (1) comprend plusieurs rangées (a-d) qui présentent des éléments de mesure (4) affichant des longueurs constantes, dans lequel les rangées (a-d) affichant des longueurs constantes sont disposées de telle sorte que les éléments de mesure (4) présentent des longueurs croissant de façon monotone dans les colonnes (A-E) de ceux-ci.

2. Corps d'étalonnage (1) selon la revendication 1, **caractérisé en ce que** plus de la moitié de la surface (12) de chaque mesure matérialisée (5) peut être balayée de façon ininterrompue et/ou **en ce que** les mesures matérialisées (5) sont reliées à l'entretoise (6) sur un seul point de fixation (9).

3. Corps d'étalonnage (1) selon la revendication 1 ou 2, **caractérisé en ce qu'**au moins sur le point de fixation (9), la section transversale (Dk) de l'entretoise (6) est plus petite que la section transversale (Dm) des mesures matérialisées (5) et/ou **en ce que** les entretoises (6) présentent une section transversale (Dz) qui est plus grande que les mesures matérialisées (5) et qui s'amincissent en direction du point de fixation (9).

4. Corps d'étalonnage (1) selon l'une quelconque des revendications 1 à 3, **caractérisé en ce que** les mesures matérialisées (5) sont réalisées sous la forme de sphères ou sous la forme de segments sphériques, en particulier dans lequel l'angle inscrit du segment sphérique est supérieur à 180°.

5. Corps d'étalonnage (1) selon l'une quelconque des revendications 1 à 4, **caractérisé en ce que** les éléments de mesure (4) comprennent des entretoises (6) qui présentent des longueurs différentes et/ou **en ce que** les entretoises (6) présentent une section transversale ronde et/ou **en ce que** les entretoises (6) présentent une section cylindrique (7).

6. Corps d'étalonnage (1) selon l'une quelconque des revendications 1 à 5, **caractérisé en ce que** certains emplacements de la grille ne sont pas occupés par des éléments de mesure (4).

7. Corps d'étalonnage (1) selon l'une quelconque des revendications 1 à 6, **caractérisé en ce que** le corps d'étalonnage (1) comprend au moins une rangée, en particulier deux rangées (e, f), qui présentent des éléments de mesure qui affichent des longueurs croissant de façon monotone.

8. Corps d'étalonnage (1) selon l'une quelconque des revendications 1 à 7, **caractérisé en ce que** le corps d'étalonnage (1) présente des renforcements qui sont destinés à agrandir la rigidité de torsion, en particulier entre les éléments de mesure (4).
